# EUROPÄISCHE PATENTSCHRIFT

(11) **EP 3 530 522 B1**
(45) Veröffentlichungstag und Bekanntmachung des Hinweises auf die Patenterteilung: **07.04.2021**
(21) Anmeldenummer: 19157195.9
(22) Anmeldetag: 14.02.2019
(51) Int. Cl.: G01S 17/931, G01S 7/481

(54) **SENSOREINRICHTUNG FÜR EIN KRAFTFAHRZEUG, VERFAHREN SOWIE KRAFTFAHRZEUG**
SENSOR DEVICE FOR A MOTOR VEHICLE, METHOD AND MOTOR VEHICLE
DISPOSITIF CAPTEUR POUR UN VÉHICULE AUTOMOBILE, PROCÉDÉ AINSI QUE VÉHICULE AUTOMOBILE

(30) Priorität: 23.02.2018 DE 102018202758
(43) Veröffentlichungstag der Anmeldung: 28.08.2019
(73) Patentinhaber: AUDI AG, 85045 Ingolstadt (DE)
(72) Erfinder: Schubert, Olaf, 93138 Lappersdorf (DE); Hodzic, Edin, 85055 Ingolstadt (DE)

(56) Entgegenhaltungen:
- EP-A1- 1 830 572
- US-A1- 2013 141 269
- US-A1- 2015 329 063
- US-A1- 2016 297 437
- US-B1- 6 318 774

## Beschreibung

Die Erfindung betrifft eine Sensoreinrichtung für ein Kraftfahrzeug, ein Verfahren zum Anpassen eines mittels einer Sensoreinrichtung ermittelten Messwerts sowie ein Kraftfahrzeug mit einer Sensoreinrichtung.

Sensoreinrichtungen für Kraftfahrzeuge sind bereits hinreichend bekannt. Moderne, hochauflösende Umfeldsensoren von Sensoreinrichtungen bilden eine Basis für komplexe Fahrerassistenzfunktionen und ein hochautomatisiertes Fahren. So sind Kraftfahrzeuge bereits mit einer Mehrzahl von Sensoreinrichtungen an deren Außen- und Innenseite ausgestattet, um Messdaten zu erfassen, in Abhängigkeit von welchen ein Steuern des jeweiligen Kraftfahrzeugs unterstützt beziehungsweise ausgeführt werden kann

Das Dokument US 2016/297437 beschreibt eine Sensorstruktur für Fahrzeuge zur Erfassung von Umweltinformationen, wobei die Sensorstruktur stoß-absorbierend ist.

Aufgabe der vorliegenden Erfindung ist es, eine besonders robuste Sensoreinrichtung für ein Kraftfahrzeug, ein Verfahren zum Anpassen eines mittels der Sensoreinrichtung ermittelten Messwerts sowie ein Kraftfahrzeug mit einer solchen robusten Sensoreinrichtung zu schaffen.

Diese Aufgabe wird erfindungsgemäß durch eine Sensoreinrichtung für ein Kraftfahrzeug, durch ein Verfahren zum Anpassen eines mittels der Sensoreinrichtung ermittelten Messwerts sowie durch ein Kraftfahrzeug mit der Sensoreinrichtung mit den Merkmalen der unabhängigen Patentansprüche gelöst. Vorteilhafte Ausgestaltungen mit zweckmäßigen Weiterbildungen der Erfindung sind in den jeweils abhängigen Ansprüchen sowie in der folgenden Beschreibung angegeben.

Ein erster Aspekt der Erfindung betrifft eine Sensoreinrichtung für ein Kraftfahrzeug, mit einem Gehäuse, in welchem ein Sensorelement aufgenommen ist. Das Sensorelement ist insbesondere in einem von dem Gehäuse zumindest im Wesentlichen umschlossenen Volumen aufgenommen und somit zumindest im Wesentlichen, insbesondere umfangsseitig, von dem Gehäuse umschlossen. Die Sensoreinrichtung umfasst des Weiteren ein eine Öffnung des Gehäuses abdeckendes Scheibenelement, über welches Messwerte einer Umgebung der Sensoreinrichtung mittels des Sensorelements ermittelbar sind. Hierbei sind die Messwerte mittels des Sensorelements durch das Scheibenelement hindurch von der Umgebung der Sensoreinrichtung ermittelbar. Beispielsweise sind die Öffnung des Gehäuses und/oder das Scheibenelement kreisrund ausgebildet. Hierbei können das Scheibenelement und die Öffnung konzentrisch zueinander mittels des Ausgleichselements angeordnet werden. Das Scheibenelement kann hierbei entlang einer Mittelachse der Öffnung überdeckend mit der Öffnung des Gehäuses angeordnet sein. Hierdurch kann eine Einschränkung eines Sichtbereichs des Sensorelements vermieden werden. Für eine besonderes hohe Robustheit ist das Scheibenelement zur Ermöglichung einer Relativbewegung zum Gehäuse unter der Vermittlung eines Ausgleichselements am Gehäuse angeordnet. Das bedeutet, dass das Ausgleichselement sowohl an dem Gehäuse als auch an dem Scheibenelement angeordnet ist und dass das Ausgleichselement die Relativbewegung des Scheibenelements relativ zu dem Gehäuse zulässt. Hierfür ist das Ausgleichselement insbesondere flexibel ausgebildet und verformbar um die Relativbewegung zwischen dem Gehäuse und dem Scheibenelement auszugleichen. Wird das Scheibenelement bewegt, so dämpft das Ausgleichselement die Bewegung des Scheibenelements hinsichtlich des Gehäuses ab. Ein Verformen des Gehäuses infolge der Bewegung des Scheibenelements und einer hieraus resultierenden möglichen Kollision zwischen dem Gehäuse und dem Scheibenelement kann mittels des Ausgleichselements unterbunden werden. Das von dem Gehäuse aufgenommene Sensorelement ist somit besonders vorteilhaft vor Beschädigungen geschützt, da das Ausgleichselement ein Verformen des Gehäuses und somit einem Beschädigen des Sensorelements vorbeugt. Des Weiteren beugt das umschließen des Sensorelements durch das Gehäuse einer Beschädigung des Sensorelements aufgrund einer möglichen Kollision mit dem Scheibenelement vor. Folglich ist die Sensoreinrichtung besonders robust ausgebildet.

In einer vorteilhaften Ausgestaltung der Erfindung ist vorgesehen, dass das Sensorelement ein optischer Sensor ist. Der Sichtbereich des optischen Sensors geht durch das Scheibenelement hindurch in die Umgebung des Kraftfahrzeugs. Hierbei kann es sich bei dem optischen Sensor beispielsweise um einen Lasersensor handeln. Der Lasersensor kann aufgrund dessen Anordnung innerhalb des Gehäuses und aufgrund der Relativbeweglichkeit des Scheibenelements zu dem Gehäuse besonders gut geschützt werden, da mittels des Ausgleichselements eine Bewegung des Scheibenelements hinsichtlich des Gehäuses abgepuffert wird. Gleichzeitig kann die Umgebung des Kraftfahrzeugs über den Sichtbereich mittels des opitschen Sensors erfasst werden.

In einer weiteren vorteilhaften Ausgestaltung der Erfindung ist vorgesehen, dass das Scheibenelement einen größeren Durchmesser aufweist als die Öffnung des Gehäuses. Hierdurch kann gewährleistet werden, dass der Sichtbereich des Sensorelements durch das Scheibenelement hinsichtlich seines Umfangs nicht begrenzt wird, sondern durch die Öffnung des Gehäuses oder von dem Sensorelement selbst vorgegeben wird. Hierdurch kann ein größtmöglicher Sichtbereich des Sensorelements ermöglicht werden.

Es hat sich als weiterhin vorteilhaft gezeigt, wenn das Ausgleichselement eine Federeinrichtung umfasst. Das bedeutet, dass das Ausgleichselement wenigstens eine Feder, insbesondere eine Spiralfeder aufweist, mittels welcher die Relativbewegung zwischen dem Scheibenelement und dem Gehäuse ausgleichbar ist. Hierbei kann die Spiralfeder eine Mittelachse aufweisen, welche durch einen Öffnungsmittelpunkt der Öffnung des Gehäuses und/oder durch einen Scheibenmittelpunkt des Scheibenelements verläuft. Somit verläuft die Spiralfeder umfangsseitig der Öffnung des Gehäuses beziehungsweise umfangsseitig des Scheibenelements. Dadurch kann die Sensoreinrichtung besonders platzsparend ausgeführt werden.

In weiterer vorteilhafter Ausgestaltung der Erfindung ist vorgesehen, dass das Ausgleichselement und das Scheibenelement das Gehäuse luftdicht verschließen. Das bedeutet, dass das in dem Gehäuse aufgenommene Sensorelement von dem Gehäuse, dem Ausgleichselement und dem Scheibenelement vollständig umschlossen wird. Somit ist das Sensorelement in einem zumindest im Wesentlichen abgeschlossenem Volumen angeordnet, sodass eine Verschmutzung des Sensorelements zumindest im Wesentlichen vermieden werden kann. Hierdurch kann einer Beschädigung des Sensorelements infolge einer Verschmutzung vorgebeugt werden.

In einer weiteren vorteilhaften Ausgestaltung der Erfindung ist vorgesehen, dass das Ausgleichselement an seiner dem Scheibenelement zugewandten ersten Seite an einen Scheibendurchmesser des Scheibenelements angepasst ist und sich in seinem Ausgleichsdurchmesser zu der Öffnung des Gehäuses hin verjüngt. Das bedeutet, dass das Ausgleichselement an dessen erster Seite außenumfangsseitig des Scheibenelements anliegt. Hierbei kann das Ausgleichselement einen ersten Ausgleichsdurchmesser aufweisen, welcher zumindest im Wesentlichen dem Scheibendurchmessers des Scheibenelements entspricht. Hierdurch kann gewährleistet werden, dass der Sichtbereich des Sensorelements von dem Ausgleichselement freigegeben wird und somit nicht durch das Ausgleichselement beschränkt wird. Entlang seiner Längserstreckungsrichtung andernends und somit an seiner zweiten Seite ist das Ausgleichselement an die Öffnung des Gehäuses angepasst. Da die Öffnung des Gehäuses insbesondere kleiner ist als der Scheibendurchmesser des Scheibenelements, verjüngt sich das Ausgleichselement vom Scheibenelement hin zur Öffnung des Gehäuses. An seiner zweiten Seite kann das Ausgleichselement einen zweiten Ausgleichsdurchmesser aufweisen, welcher zumindest im Wesentlichen einem Öffnungsdurchmesser der Öffnung des Gehäuses entspricht. Dies dient einem Freigeben des Sichtbereichs des Sensorelements mittels des Ausgleichselements, sodass der Sichtbereich des Sensorelements nicht durch das Ausgleichselement eingeschränkt wird. Durch das Anpassen der jeweiligen Ausgleichsdurchmesser an das Scheibenelement beziehungsweise an die Öffnung ist die Sensoreinrichtung besonders platzsparend ausgeführt.

Hierbei hat es sich als besonders vorteilhaft erwiesen wenn das Ausgleichselement kegelförmig ausgebildet ist. Hierbei ist unter kegelförmig insbesondere zu verstehen, dass sich der jeweilige Ausgleichsdurchmesser des Ausgleichselements vom zweiten Ausgleichsdurchmesser der zweiten Seite zum ersten Ausgleichsdurchmesser der ersten Seite hin kontinuierlich und gegebenenfalls zusätzlich gleichmäßig vergrößert. Hierdurch kann sichergestellt werden, dass der Sichtbereich des Sensorelements durch das Ausgleichselement freigegeben wird und nicht durch das Ausgleichselement eingeschränkt wird.

Ein weiterer Aspekt der Erfindung betrifft ein Verfahren zum Anpassen eines mittels der erfindungsgemäßen Sensoreinrichtung ermittelten Messwerts, bei welchem eine Ausrichtung des Scheibenelements relativ zu dem Sensorelement erfasst wird und der mittels des Sensorelements ermittelte Messwert in Abhängigkeit von der Ausrichtung angepasst wird. Das bedeutet, dass mittels des Sensorelements über dessen Sichtbereich der Messwert der Umgebung des Kraftfahrzeugs erfasst wird und in Abhängigkeit von der erfassten Ausrichtung angepasst wird. Hierbei kann der Messwert mittels einer Recheneinrichtung in Abhängigkeit von der Ausrichtung angepasst werden. Beispielsweise ist eine Ausrichtungserfassungseinrichtung vorgesehen, mittels welcher die Ausrichtung des Scheibenelements relativ zu dem Sensorelement erfassbar ist und für die Recheneinrichtung bereitstellbar ist. Durch das Anpassen des Messwerts in Abhängigkeit von der Ausrichtung kann sichergestellt werden, dass der Messwert durch eine jeweilige Ausrichtung, insbesondere eine sich verändernde Ausrichtung des Scheibenelements nicht verfälscht wird. Eine jeweilige Ausrichtung des Scheibenelements kann ein optisches Signal, welches aus der Umgebung über das Scheibenelement mittels des Sensorelements als Messwert erfasst wird, beeinflussen. Anhand der Ausrichtung des Scheibenelements kann die jeweilige Brechung des mittels des Sensorelement erfassten optischen Signals ermittelt und in Abhängigkeit davon der Messwert angepasst werden.

Ein weiterer Aspekt der Erfindung betrifft ein Kraftfahrzeug mit einer erfindungsgemäßen Sensoreinrichtung. Da die erfindungsgemäße Sensoreinrichtung besonders robust ist, kann eine Erfassung von Messwerten mittels der Sensoreinrichtung an dem Kraftfahrzeug sichergestellt werden. Hierdurch kann beispielsweise das Kraftfahrzeug besonders sicher in Abhängigkeit von mittels der Sensoreinrichtung ermittelten Messdaten gesteuert werden.

In diesem Zusammenhang hat es sich als besonders vorteilhaft herausgestellt wenn das Gehäuse der Sensoreinrichtung zumindest mittelbar an einem Trägerelement eines Stoßfängers des Kraftfahrzeugs befestigt ist und das Scheibenelement in einer Öffnung einer Stoßfängerverkleidung des Kraftfahrzeugs angeordnet ist. Hierbei ist das Gehäuse beispielsweise starr an dem Trägerelement des Stoßfängers befestigt, wohingegen das Scheibenelement relativ zur Stoßfängerverkleidung bewegbar ist. Bei einer derartigen Anordnung der Sensoreinrichtung an dem Kraftfahrzeug ist das Sensorelement vorteilhafterweise besonders sicher an dem Trägerelement des Stoßfängers befestigt während das Scheibenelement zu dem Gehäuse der Sensoreinrichtung relativ beweglich ist. Das Sensorelement ist somit vor Beschädigungen infolge einer Relativbewegung des Scheibenelements zum Gehäuse insbesondere infolge einer Kollision eines Elements mit dem Scheibenelement, geschützt.

Zu der Erfindung gehören auch Weiterbildungen des erfindungsgemäßen Verfahrens sowie des erfindungsgemäßen Kraftfahrzeugs, die Merkmale aufweisen, wie sie bereits im Zusammenhang mit den Weiterbildungen der erfindungsgemäßen Sensoreinrichtung beschrieben worden sind. Aus diesem Grund sind die entsprechenden Weiterbildungen des erfindungsgemäßen Verfahrens sowie des erfindungsgemäßen Kraftfahrzeugs hier nicht noch einmal beschrieben. Die Erfindung umfasst auch Kombinationen der beschriebenen Ausführungsformen.

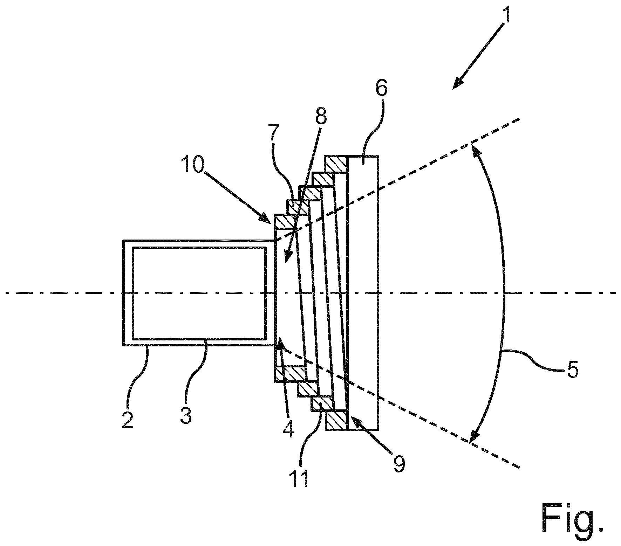

Im Folgenden sind Ausführungsbeispiele der Erfindung beschrieben. Hierzu zeigt die einzige Fig. eine schematische Schnittansicht einer Sensoreinrichtung für ein Kraftfahrzeug mit einem in einem Gehäuse aufgenommenen Sensorelement sowie mit einem über ein Ausgleichselement relativ beweglich am Gehäuse gehaltenen Scheibenelement, welches einen Sichtbereich des Sensorelements freigibt.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In der einzigen Fig. ist eine schematische Schnittansicht einer Sensoreinrichtung 1 für ein Kraftfahrzeug dargestellt. Mittels der Sensoreinrichtung 1 können Messwerte einer Umgebung des Kraftfahrzeugs ermittelt werden und das Kraftfahrzeug in Abhängigkeit von den mittels der Sensoreinrichtung 1 ermittelten Messwerten betrieben werden. Insbesondere kann es sich bei der Sensoreinrichtung 1 um einen Parksensor handeln, mittels welchem ein Abstand zwischen dem die Sensoreinrichtung 1 aufweisenden Kraftfahrzeug und einem weiteren Gegenstand ermittelt wird, um das Kraftfahrzeug bei einem Parkvorgang zu unterstützen.

Wie in der einzigen Fig. erkannt werden kann, umfasst die Sensoreinrichtung 1 ein von einem Gehäuse 2 aufgenommenes Sensorelement 3. Das Gehäuse 2 weist eine Öffnung 4 auf, durch welche hindurch sich ein Sichtbereich 5 des Sensorelements 3 erstreckt. Vorliegend handelt es sich bei dem Sensorelement 3 um einen optischen Sensor welcher die Umgebung des Kraftfahrzeugs in dem Sichtbereich 5 erfasst. Der Sichtbereich 5 ist insbesondere kegelförmig ausgebildet.

Die Sensoreinrichtung 1 umfasst des Weiteren ein Scheibenelement 6 welches vorliegend kreisrund ausgebildet ist und in seiner in der Fig. dargestellten Ausgangslage konzentrisch zur kreisrunden Öffnung 4 des Gehäuses 2 angeordnet ist. Das Scheibenelement 6 gibt zum einen den Sichtbereich 5 für das Sensorelement 3 frei, da das Scheibenelement 6 vorliegend lichtdurchlässig ausgebildet ist, zum anderen begrenzt das Scheibenelement 6 zusammen mit dem Gehäuse 2 und einem Ausgleichselement 7 ein Sensorvolumen 8, in welchem das Sensorelement 3 aufgenommen ist. Hierdurch kann sichergestellt werden, dass der Sichtbereich 5 in seinem in dem Sensorvolumen 8 angeordneten Längenbereich von Verunreinigungen ungestört ist. Überdies kann durch die Anordnung des Sensorelements 3 in dem begrenzten und abgeschlossenen Sensorvolumen 8 einer Verunreinigung des Sensorelements 3 vorgebeugt werden.

Das Scheibenelement 6 ist zur Ermöglichung einer Relativbewegung zum Gehäuse 2 unter Vermittlung des Ausgleichselements 7 am Gehäuse 2 angeordnet. Vorliegend ist das Ausgleichselement 7 an seiner ersten Seite 9 an dem Scheibenelement 6 anliegend angeordnet und an seiner zweiten Seite 10 an dem Gehäuse 2 anliegend angeordnet. Somit ist das Ausgleichselement 7 einenends an dem Scheibenelement 6 und andernends an dem Gehäuse 2 abgestützt. Vorliegend weist die erste Seite 9 des Ausgleichselements 7 einen gleichen Außendurchmesser auf wie das Scheibenelement 6. An der zweiten Seite 10 ist das Ausgleichselement 7 im Bereich der Öffnung 4 an dem Gehäuse 2 abgestützt. Wie in der einzigen Fig. zu erkennen ist, weist das Ausgleichselement 7 vorliegend ein teleskopartiges Federelement 11 auf. Dieses teleskopartige Federelement 11 weist zumindest im Wesentlichen eine Kegelform auf, welche sich von dem Scheibenelement 6 bis zu der Öffnung 4 des Gehäuses 2 verjüngt. Die Sensoreinrichtung 1 ist vorliegend zumindest im Wesentlichen rotationssymmetrisch ausgebildet.

Zum Befestigen der Sensoreinrichtung 1 an dem Kraftfahrzeug kann das Gehäuse 2 der Sensoreinrichtung 1 zumindest mittelbar an einem Trägerelement eines Stoßfängers des Kraftfahrzeugs befestigt werden und das Scheibenelement 6 in einer Öffnung einer Stoßfängerverkleidung des Kraftfahrzeugs angeordnet werden. Insbesondere ist dabei das Scheibenelement 6 der Sensoreinrichtung 1 der Umgebung des Kraftfahrzeugs zugewandt, wohingegen das Gehäuse 2 der Sensoreinrichtung 1 der Umgebung des Kraftfahrzeugs abgewandt ist. Das Scheibenelement 6 kann mit der Stoßfängerverkleidung des Kraftfahrzeugs bündig abschließen um eine glatte Außenoberfläche des Kraftfahrzeugs zu erzeugen.

Ein mittels der Sensoreinrichtung 1 ermittelter Messwert kann beim Betreiben der Sensoreinrichtung 1 in Abhängigkeit von einer Ausrichtung des Scheibenelements 6 relativ zum Sensorelement 3 angepasst werden. Insbesondere kann eine in der einzigen Fig. nicht dargestellte Ausrichtungserfassungseinrichtung vorgesehen sein, mittels welcher die Ausrichtung des Scheibenelements 6 relativ zu dem Sensorelement 3 erfasst wird. Anschließend kann über eine Software, insbesondere mittels einer Recheneinrichtung, die mittels der Ausrichtungserfassungseinrichtung erfasste Ausrichtung des Scheibenelements 6 relativ zum Sensorelement 3 ausgewertet werden und der mittels des Sensorelements 3 erfasste Messwert angepasst werden. Insbesondere kann der Messwert in Abhängigkeit von Abweichungen der Ausrichtung von der Ausgangslage, welche sich durch eine leichte Verkippung des Scheibenelements 6 nach einem Parkrempler ergeben können, angepasst werden. Nach der Anpassung kann der Messwert insbesondere zum Steuern des Kraftfahrzeugs weiterverarbeitet werden.

Dabei liegt der beschriebenen Sensoreinrichtung 1 die Erkenntnis zugrunde, dass moderne, hochauflösende Umfeldsensoren eine Basis für komplexe Fahrerassistenzfunktionen und ein hochautomatisiertes Fahren bilden. Heutige Umfeldsensoren werden als eine starre Einheit in einem Fahrzeug verbaut, oft in einem Frontbereich. Insbesondere ist ein dem Scheibenelement 6 entsprechendes Frontscheibenelement eines optischen Laserscannersensors üblicherweise auf ein Laserscannergehäuse geklebt und bildet hierbei einen wesentlichen Teil des Laserscannergehäuses.

Mit einer zunehmenden Bedeutung der Umfeldsensoren für Fahrzeuge steigen funktionale und gesetzliche Anforderungen an eine Robustheit und Stabilität der Umfeldsensoren inklusive ihrer Halterungen. Steinschläge und kleinere Unfälle wie Parkrempler gehören zu üblichen Beanspruchungen von Umfeldsensoren, welche häufig in unteren bis mittleren Fahrzeugbereichen, insbesondere in einem Bereich von 0,15 bis 1 m über einer Fahrbahn, insbesondere in einem Bereich von 0,25 bis 0,8 m über der Fahrbahn verbaut sind. Zukünftige gesetzliche Anforderungen könnten es erfordern, dass der jeweilige Umfeldsensor nicht nur eine Beschädigung im Rahmen einer Diagnose diagnostiziert, sondern im Falle einer Beschädigung weiterhin voll funktionsfähig ist. Erschwerend kommt für Umfeldsensoren in einer Fahrzeugfront des Fahrzeugs hinzu, dass Fußgängercrashanforderungen eine relativ weiche Fahrzeugfront erfordern, Umfeldsensoren jedoch vergleichsweise starr verbaut sein sollten.

Ein Einbau von Umfeldsensoren hinter der Schutzscheibe des Fahrzeugs ist für einzelne Umfeldsensoren wie eine Kamera möglich und vorteilhaft, allerdings können dort nicht alle notwendigen Umfeldsensoren untergebracht werden. Ein jeweiliger Sensorsichtbereich der Umfeldsensoren ist durch eine Abschattung der Fahrzeugfront stark eingeschränkt, insbesondere wird ein Boden, auf welchem das Fahrzeug steht erst in einem Abstand von ca. 10 m gesehen. Des Weiteren können die Umfeldsensoren hinter der Windschutzscheibe Platz in einem oberen Scheibenbereich einnehmen und so einen Fahrersichtbereich des Fahrers einschränken. Weitere Anforderungen wie eine maximale Temperatur und Varianten aufgrund einer Vielzahl von unterschiedlichen Windschutzscheiben erschweren eine Platzierung von Umfeldsensoren in diesem Bereich zusätzlich.

Ein stabiler Einbau der Umfeldsensoren in der Fahrzeugfront außerhalb eines Aufschlagbereichs ist prinzipiell möglich, typischerweise aber nicht kompatibel mit einem Design jeweiliger Marken. Es wird daher eine Lösung benötigt, welche möglichst alle gesetzlichen und funktionalen Anforderungen erfüllt und designverträglich ist. Des Weiteren sollte die Lösung stabil sein und zu keiner Dejustage des jeweiligen Umfeldsensors über dessen Lebensdauer führen sowie Anforderungen einer Qualitätssicherung insbesondere hinsichtlich eines Steinschlags erfüllen. Des Weiteren ist darauf zu achten, dass ein Weg von dem Sensorelement 3, welches Teil eines Umfeldsensors sein kann, bis zu einer Austrittsfläche des Sichtbereichs 5 aus der Fahrzeugfront durch keine Verunreinigungen wie Schmutz, Kondenswasser, Reifenabrieb, Öle etc. gestört wird.

Als diese Lösung wird die in der einzigen Fig. dargestellte Sensoreinrichtung 1 vorgeschlagen. Das Sensorelement 3 wird im Kraftfahrzeug relativ zu einer Außenoberfläche des Kraftfahrzeugs nach hinten versetzt montiert und befindet sich außerhalb eines kritischen Bereichs an einem stabilen Strukturelement des Kraftfahrzeugs. Über einen abgedichteten Federmechanismus, vorliegend das Ausgleichselement 7, ist das in dem Gehäuse 2 aufgenommene Sensorelement 3 mittelbar mit dem Scheibenelement 6 der Sensoreinrichtung 1 verbunden. Das Scheibenelement 6 kann sich im Fall eines kleinen Unfalls unabhängig, das bedeutet relativ zu dem Sensorelement 3, bewegen. Auch eine leichte Verschiebung des Scheibenelements 6 relativ zum Sensorelement 3 infolge von Alterungsprozessen toleriert das Ausgleichselement 7 ohne eine Sensorfunktion des Sensorelements 3 zu beeinträchtigen. Hierbei wird der Sichtbereich 5 durch das Ausgleichselement 7 freigehalten und somit nicht abgedeckt.

Die Sensoreinrichtung 1 ermöglicht, dass gesetzliche Anforderungen erfüllt werden. Darüber hinaus bietet die Sensoreinrichtung 1 besonders viel Flexibilität für ein Design des die Sensoreinrichtung 1 aufweisenden Kraftfahrzeugs. Überdies bietet die Sensoreinrichtung 1 einen Sicherheitsvorteil gegenüber herkömmlichen Umfeldsensoren, da die Sensoreinrichtung 1 besonders robust gegenüber Parkremplern ist. Bei Beschädigungen des Scheibenelements 6 ist ein günstiger Scheibenwechsel möglich, da bei kleineren Schäden lediglich das Scheibenelement 6 ausgetauscht wird anstatt einem Austausch der gesamten Sensoreinrichtung 1 wie bei herkömmlichen Umfeldsensoren. Hieraus kann eine besonders günstige Kaskoeinstufung resultieren.

Insgesamt zeigen die Beispiele, wie durch die Erfindung eine schlagtolerante Montage von die Sensoreinrichtung 1 umfassender Umfeldsensorik in Kraftfahrzeugen umgesetzt werden kann.

## Patentansprüche

1. Sensoreinrichtung (1) für ein Kraftfahrzeug, mit einem Gehäuse (2), in welchem ein Sensorelement (3) aufgenommen ist, und mit einem eine Öffnung (4) des Gehäuses (2) abdeckenden lichtdurchlässigen Scheibenelement (6), über welche Messwerte einer Umgebung der Sensoreinrichtung (1) mittels des Sensorelements (3) ermittelbar sind, **dadurch gekennzeichnet, dass** das Scheibenelement (6) zur Ermöglichung einer Relativbewegung zum Gehäuse (2) unter Vermittlung eines flexiblen und verformbaren Ausgleichselements (7) am Gehäuse (2) angeordnet ist

2. Sensoreinrichtung (1) nach Anspruch 1, wobei das Sensorelement (3) ein optischer Sensor ist.

3. Sensoreinrichtung (1) nach einem der vorhergehenden Ansprüche, wobei das Scheibenelement (6) einen größeren Durchmesser aufweist als die Öffnung (4) des Gehäuses (2).

4. Sensoreinrichtung (1) nach einem der vorhergehenden Ansprüche, wobei das Ausgleichselement (7) eine Federeinrichtung umfasst.

5. Sensoreinrichtung (1) nach einem der vorhergehenden Ansprüche, wobei das Ausgleichselement (7) und das Scheibenelement (6) das Gehäuse (2) luftdicht verschließen.

6. Sensoreinrichtung (1) nach einem der vorhergehenden Ansprüche, wobei das Ausgleichselement (7) an seiner dem Scheibenelement (6) zugewandten ersten Seite an einen Scheibendurchmesser des Scheibenelements (6) angepasst ist und sich zu der Öffnung (4) des Gehäuses (2) hin verjüngt.

7. Sensoreinrichtung (1) nach einem der vorhergehenden Ansprüche, wobei das Ausgleichselement (7) kegelförmig ausgebildet ist.

8. Kraftfahrzeug mit einer Sensoreinrichtung (1) nach einem der Ansprüche 1 bis 6.

9. Kraftfahrzeug nach Anspruch 8, wobei das Gehäuse (2) der Sensoreinrichtung (1) zumindest mittelbar an einem Trägerelement eines Stoßfängers des Kraftfahrzeugs befestigt ist und das Scheibenelement (6) in einer Öffnung einer Stoßfängerverkleidung des Kraftfahrzeugs angeordnet ist.

## Claims

1. Sensor device (1) for a motor vehicle, having a housing (2), in which a sensor element (3) is accommodated, and having a translucent disk element (6) covering an opening (4) in the housing (2), by means of which measured values of an environment of the sensor device (1) can be determined by means of the sensor element (3), **characterised in that** the disk element (6) is arranged on the housing (2) to facilitate a movement relative to the housing (2) through the interposition of a flexible and deformable compensating element (7).

2. Sensor device (1) according to claim 1, wherein the sensor element (3) is an optical sensor.

3. Sensor device (1) according to any of the preceding claims, wherein the disk element (6) has a larger diameter than the opening (4) in the housing (2).

4. Sensor device (1) according to any of the preceding claims, wherein the compensating element (7) comprises a spring device.

5. Sensor device (1) according to any of the preceding claims, wherein the compensating element (7) and the disk element (6) hermetically seal the housing (2).

6. Sensor device (1) according to any of the preceding claims, wherein, on its first side facing the disk element (6), the compensating element (7) is adjusted to a disk diameter of the disk element (6) and tapers towards the opening (4) in the housing (2).

7. Sensor device (1) according to any of the preceding claims, wherein the compensating element (7) is conical.

8. Motor vehicle having a sensor device (1) according to any of claims 1 to 6.

9. Motor vehicle according to claim 8, wherein the housing (2) of the sensor device (1) is attached at least indirectly to a support element of a bumper of the motor vehicle and the disk element (6) is arranged in an opening in a bumper cover of the motor vehicle.

## Revendications

1. Dispositif capteur (1) pour un véhicule automobile, avec un boîtier (2) dans lequel un élément capteur (3) est reçu, et avec un élément de vitre (6) perméable à la lumière recouvrant une ouverture (4) du boîtier (2), par laquelle des valeurs de mesure d'un environnement du dispositif capteur (1) peuvent être déterminées au moyen de l'élément capteur (3), **caractérisé en ce que** l'élément de vitre (6) est agencé pour permettre un mouvement relatif vers le boîtier (2) par l'intermédiaire d'un élément de compensation (7) flexible et déformable au niveau du boîtier (2).

2. Dispositif capteur (1) selon la revendication 1, dans lequel l'élément capteur (3) est un capteur optique.

3. Dispositif capteur (1) selon l'une quelconque des revendications précédentes, dans lequel l'élément de vitre (6) présente un diamètre plus grand que l'ouverture (4) du boîtier (2).

4. Dispositif capteur (1) selon l'une quelconque des revendications précédentes, dans lequel l'élément de compensation (7) comporte un dispositif de ressort.

5. Dispositif capteur (1) selon l'une quelconque des revendications précédentes, dans lequel l'élément de compensation (7) et l'élément de vitre (6) ferment de manière étanche à l'air le boîtier (2).

6. Dispositif capteur (1) selon l'une quelconque des revendications précédentes, dans lequel l'élément de compensation (7) est adapté au niveau de son premier côté tourné vers l'élément de vitre (6) à un diamètre de vitre de l'élément de vitre (6) et se rétrécit vers l'ouverture (4) du boîtier (2).

7. Dispositif capteur (1) selon l'une quelconque des revendications précédentes, dans lequel l'élément de compensation (7) est réalisé en forme de cône.

8. Véhicule automobile avec un dispositif capteur (1) selon l'une quelconque des revendications 1 à 6.

9. Véhicule automobile selon la revendication 8, dans lequel le boîtier (2) du dispositif capteur (1) est fixé au moins indirectement à un élément porteur d'un pare-chocs du véhicule automobile et l'élément de vitre (6) est agencé dans une ouverture d'un revêtement de pare-chocs du véhicule automobile.
